# EUROPEAN PATENT SPECIFICATION

(11) **EP 3 208 245 B1**
(45) Date of publication and mention of the grant of the patent: **01.05.2019**
(21) Application number: 17157504.6
(22) Date of filing: 22.02.2017
(51) Int. Cl.: C03B 33/07

(54) **MACHINE AND METHOD FOR CUTTING LAMINATED GLASS SHEET**
VORRICHTUNG UND VERFAHREN ZUM SCHNEIDEN VON VERBUNDENEN GLASSCHEIBEN
APPAREIL ET PROCÉDÉ DE DÉCOUPE DE FEUILLE DE VERRE LAMINÉE

(30) Priority: 22.02.2016 IT UB20160947
(43) Date of publication of application: 23.08.2017
(73) Proprietor: Bottero S.p.A., 12100 Cuneo (IT)
(72) Inventor: GHINAMO, Leonardo, 12100 Cuneo (IT); FERRARI, Simone, 12100 Cuneo (IT); OLOCCO, Guido, 12012 Boves (IT); OSTORERO, Marcello, 12010 Vignolo (IT); VIGLIETTI, Davide, 12080 Pianfei (IT)
(74) Representative: Lovino, Paolo

(56) References cited:
- EP-A1- 2 783 785
- EP-A1- 2 783 786
- WO-A1-2006/129504

## Description

The present invention relates to a machine for cutting a laminated glass sheet.

In particular, the present invention relates to a machine for cutting a laminated glass sheet comprising two lateral glass sheets and an intermediate sheet of thermoplastic material, generally known as PVB.

The use of a machine for cutting a glass sheet of the type defined above is known, the machine comprising a sheet-supporting surface and, for each glass sheet, a respective breaking assembly for cutting the laminated sheet along a predetermined cutting line.

According to one embodiment, the assembly comprises a scoring tool adapted to perform a scoring line and a respective breaking assembly for breaking the respective glass sheet along the corresponding scoring line and obtaining two sheet parts retained adjacent to each other by an intermediate portion of the thermoplastic sheet extending along the breaking line.

The machine also comprises a heating device for heating the intermediate portion of the thermoplastic sheet.

The heating device generally comprises a single elongated incandescent heat lamp, which extends from one side to the other of the supporting surface, and therefore can reach four meters in length.

Alternatively, the single lamp is replaced by two or more lamps arranged aligned and joined head-to-head with each other.

Regardless of the type, the lamp is carried by a motorized head that moves the lamp parallel to itself, to and from the supporting surface between a retracted rest position, in which it is turned off, and a forward operative position, in which it is held adjacent to the supporting surface and turned on for a given length of time such as to heat the said intermediate portion of the sheet of thermoplastic material.

Known machines of the type described above, although widely used, have some critical issues essentially attributable to the heating device used.

In particular, if on the one hand, the single lamp allows an even heating of the intermediate portion, on the other hand, it entails an inevitable loss of energy when the sheet to be cut arranged on the supporting surface has a much smaller width than that of said supporting surface. In this case, in fact, only a part of the emitted beam is actually used to heat the intermediate sheet while the remaining part is dispersed by passing through the slit formed in the supporting surface.

In addition to this, the single lamp, precisely because of its length, is particularly expensive but, more importantly, delicate. For this reason, special attention should be paid during transport and handling. It is for this reason that the installation of the lamps in the machine and the maintenance/replacement thereof must be performed by qualified personnel only, which is not normally present on the site where the machine operates, and thus with far from negligible intervention costs.

The solution with multiple aligned lamps partly solves the above problems but has the drawback of not ensuring an even heating, as the emitted beam is not continuous along the entire width of the table, but interrupted by dark areas when passing from one lamp to the other.

EP 2 783 785 discloses a cutting machine in which a heating source is used to broken a glass sheet.

The object of the present invention is to provide a machine for cutting a laminated glass sheet, which allows the problems described above to be solved in a simple and inexpensive way, and in particular, compared to known solutions, allows an effective and even heating of the intermediate portion of the thermoplastic sheet, whatever the size of the sheet arranged on the supporting surface may be.

A further object of the present invention is to provide a machine which has low manufacturing, functional and maintenance costs.

A final object of the present invention is to provide a machine which allows the heating of the thermoplastic material regardless of the shape or the pattern of the breaking lines, along which the cutting of the laminated glass sheet is provided.

According to the present invention, a machine for cutting a laminated glass sheet is provided, as claimed in claim 1.

The invention will now be described with reference to the accompanying drawings, which illustrate a non-limiting embodiment thereof, in which:
- Figure 1 illustrates schematically, and substantially in the block form, a machine for cutting a laminated glass sheet manufactured according to the teachings of the present invention;
- Figure 2 illustrates, in side elevation and on a greatly enlarged scale, a detail of Figure 1; and
- Figure 3 illustrates a variant of a detail of Figure 1.

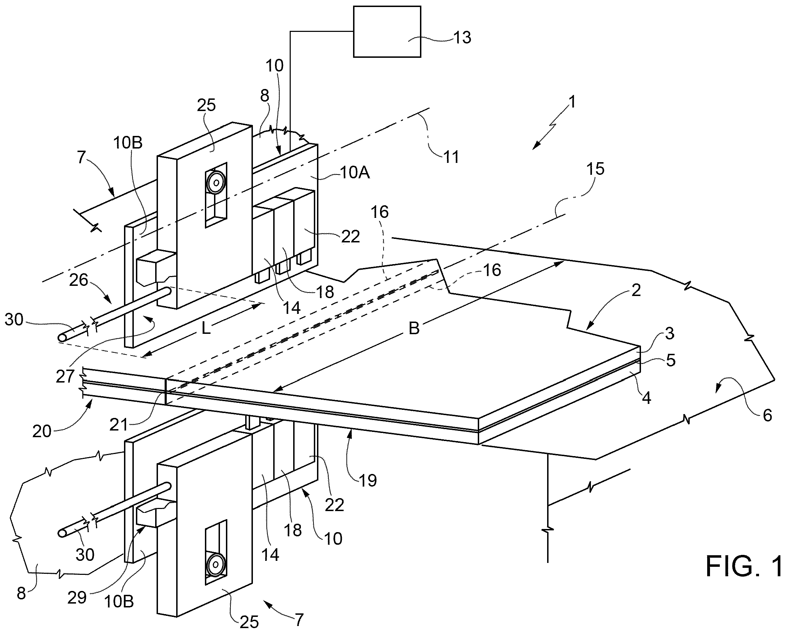

In figure 1, number 1 indicates, as a whole, a machine for cutting a laminated glass sheet 2 comprising two lateral glass sheets, indicated as 3 and 4, and an intermediate sheet 5 of thermoplastic material, generally known as PVB.

The machine 1 comprises a supporting surface 6 for the sheet 2 and, for each glass sheet 3,4, a corresponding cutting bridge 7, which are arranged on opposite sides of the supporting surface 6 itself in fixed positions. Each bridge 7 has a corresponding crosspiece 8 facing, and spaced apart from, the supporting surface 6.

Each crosspiece 8 is coupled to a respective motorized carriage 10, which extends along the corresponding crosspiece 8, is movable along the corresponding crosspiece 8 itself in both directions, in a transverse direction 11 parallel to the supporting surface 6 under the control of a command and control unit 13 known per se and schematically illustrated.

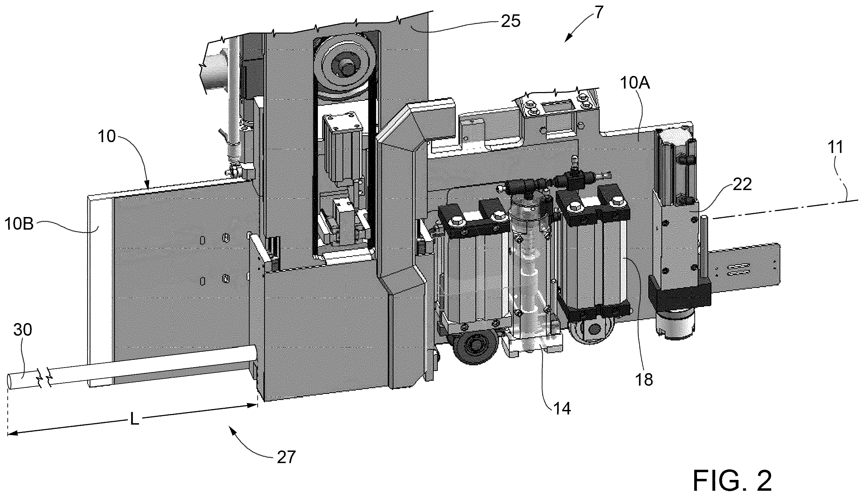

With reference to Figure 1, and particularly to Figure 2, each carriage 10 carries a scoring device 14, which is known per se and not described in detail, and comprises a scoring wheel movable along a predetermined sheet-cutting line 15, which is rectilinear in the case shown, for obtaining, in use, a respective scoring line 16 on the corresponding glass sheet.

Each carriage 10 carries a breaking device 18, arranged side by side with the respective scoring device 14, for breaking the scored glass sheets 3, 4, also the device 18 being known per se and not described in detail. The devices 18, in use, break the glass sheets 3,4 along the respective scoring lines 16, so as to form two sheet parts 19 and 20 joined together by a continuous intermediate elongated portion 21 of the thermoplastic sheet 5 straddling the cutting line 15 (Figure 1).

Again with reference to Figure 2, each carriage 10 also carries a respective rotating device 22, known per se and not described in detail, conveniently, but not necessarily, coupled to a terminal end portion 10A of the corresponding carriage 10 and adapted to cooperate with the rotating device 22 of the other carriage 10.

According to a variant, only one of the carriages 10 carries a rotating device, which is also known per se and, for example, of the sucker type, adapted to be coupled to a respective glass sheet 3,4 to rotate the sheet 2 on the supporting surface 6.

Each of the carriages 10, depending on the different configurations of the machine 1, further carries other devices for machining the sheet 2, in the specific case described a grinding unit 25. Depending on the configurations, the breaking devices or the rotating devices may not be mounted on the carriages 10.

Conveniently, but not necessarily, the devices of a single carriage 10 are aligned with each other along a direction parallel to direction 11.

Still with reference to Figure 1, the machine 1 also comprises a heating assembly 26 for heating the intermediate elongated portion 21.

Preferably, the heating assembly 26 comprises, for each carriage 10, a respective heating device 27, which is fixed to the corresponding carriage 10 to move together with said corresponding carriage 10, and, when activated, is adapted to emit a corresponding continuous thermal heat beam towards the supporting surface 6 and, in use, towards the intermediate elongated portion 21 so as to cause the gradual heating of the same intermediate elongated portion 21. Preferably, but not necessarily, the thermal heat beam is of the blade type and in any case of a shape that changes according to the shape of the heat source or that is defined by any units for concentrating or modulating the beam emitted by the heat source, which are provided downstream of the heat source itself.

Each device 27 is conveniently coupled to a free end portion 10B of the corresponding carriage 10, in the described case opposite to portion 10A.

Each device 27 comprises a support head 29 fixed to the portion 10B of the corresponding carriage 10 and a rectilinear heat source 30, preferably, but not necessarily, defined by an incandescent or filament lamp. The heat source 30 extends overhangingly from the respective head 29 parallel to direction 11 and, at least in part, overhangingly from the respective carriage 10, as can be seen in the attached figures.

According to a variant, not shown, the heat sources 30 do not project overhangingly beyond the respective carriages 10. Preferably, but not necessarily, each heat source 30, when parallel to direction 11, is arranged on the corresponding carriage 10 in such a position as to be intersected by a plane which is orthogonal to the supporting surface 6 and parallel to the cutting line 15, and on which the same line 15 lies.

Alternatively, the heat source 30 is at least partly curved, or annular and optionally elongated, or even circular.

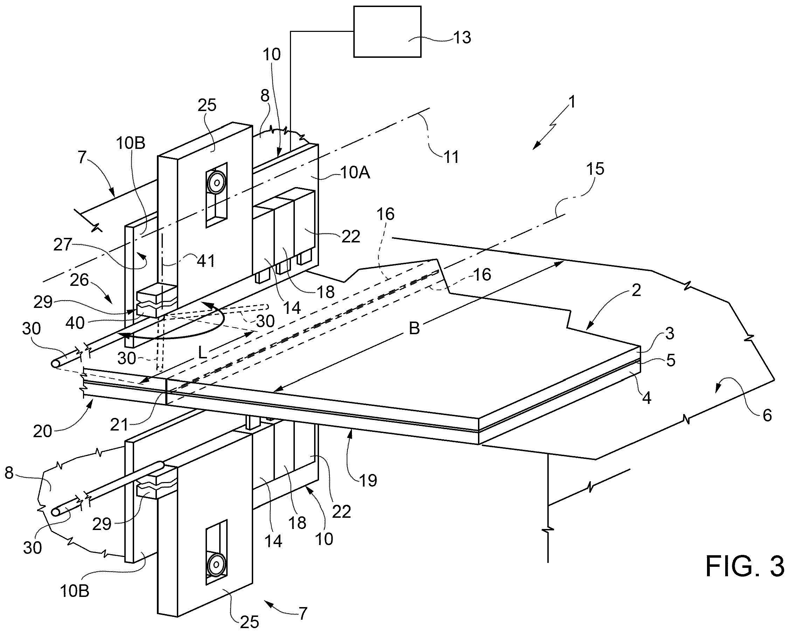

According to a further variant shown in Figure 3, each support head 29 is coupled to the respective carriage 10 via a motorized rotating device 40 controlled by the unit 13 and adapted to rotate the heat source 30, and any devices for concentrating the incident thermal beam on the sheet, about a hinge axis 41 orthogonal to the supporting surface 6, conveniently, but not necessarily, by an angle equal to 180°.

Experimentally, it has been observed that being able to arrange the heat source 30 in such a position as to be elongated in a direction orthogonal or inclined with respect to the direction 11 of movement of the corresponding carriage 10 facilitates the heating in those cases where the cutting line 15 is closed or has a pattern with one or more curved sections. In this case, the rotation angle is also determined by considering the extension of the cutting line 15 in a direction orthogonal to the aforementioned direction 11. In any case, each heat source 30 has a maximum dimension L, measured in a direction parallel to direction 11, which is smaller than the width B of the supporting surface 6 measured in the same direction.

Conveniently, each heat source 30 has a maximum dimension L that is smaller than or equal to a quarter of the width B of the supporting surface 6. Preferably, the length L is conveniently equal to or greater than 5 millimetres. Advantageously, the dimension L ranges between 10 and 20 millimetres. Preferably, but not necessarily, each heat source 30, when rectilinear, is arranged on the corresponding carriage 10 in such a position as to be intersected by a plane orthogonal to the supporting surface 6, parallel to the cutting line 15, and on which said cutting line 15 lies.

Conveniently, each heat source 30 is associated with an optical device for concentrating the thermal beam emitted by the corresponding source on the intermediate portion 21 or in areas close to the intermediate portion 21 itself.

In use, the intermediate portion 21 is heated under the command and/or control of the unit 13 by arranging the devices 14,18 and 22 in their retracted rest position, by activating the heating assembly 26 and by shifting the carriages 10 in direction 11 and by possibly moving the sheet 2 on the supporting surface 6 so as to move the heat sources 30 along the intermediate portion 21 to be heated. By varying the thickness and the chemical-physical characteristics of the intermediate sheet 5, the heat sources 30 may be gradually shifted in direction 11, possibly bringing a free end portion of said heat sources 30 beyond an outer peripheral edge of the sheet 2, or the heat sources 30 may be moved with an alternating cyclic movement in the same direction 11 until the desired heating is achieved.

Alternatively, when the dimension of the portion to be heated, measured parallel to direction 11, is smaller than the dimension L of the heat sources, measured in the same direction, said heat sources 30 are shifted and moved into a heating position and kept fixed in this position until the desired heating of the intermediate portion 21 is obtained.

From the foregoing, first of all, it appears that the use of continuous heat sources allows to achieve an even heating of the intermediate portion 21, avoiding the presence of sections at different temperatures, which are generated, in the known solutions, by the passage from one heat source to the other when they are aligned.

In addition to this, the translational motion of the heat sources allows to heat a section equal to the width alone of the sheet regardless of the width of the sheet itself, decreasing, and in many cases eliminating the dispersion and the inevitable dissipation of energy outside the sheet or on sheet parts not affected by the cutting line. In other words, the movement of the sources 30 along the intermediate portion 21, and along the length of said intermediate portion 21 only, allows each time the "formation" of a thermal beam or a thermal blade dedicated to the type of the cutting line or of the width of the sheet to be cut, and thus only using the thermal beam that is actually required for heating the intermediate portion 21. This results in large savings in terms of energy, especially when items with shapes and dimensions that may be very different from each other are separated from the sheet 2.

Then, the use of lamps of very small dimensions with respect to the width of the supporting surface 6 allows the costs to be significantly reduced, both in terms of the cost of a single lamp, and of the transport, maintenance and replacement costs. In fact, lamps having the size mentioned above may be not only easily transported but are such that they can be replaced by personnel in charge of the machine without the intervention of qualified personnel, as well as being easily positioned with respect to the corresponding carriage 10.

Lastly, the movement or the positioning of the heat sources 30 by means of a tool carriage already on board the machine to move other operating devices enables for the provision of machines that, with respect to the known solutions, are devoid of the dedicated unit for moving said heat source to and from the supporting surface, and therefore are structurally simpler and more cost-effective.

Finally, providing lamps protruding from one side only of the corresponding carriage 10 allows the dimensions in width of the entire machine 1 to be reduced, as space for the transit of said lamp must be provided only on one side of the said machine.

From the foregoing it appears that the heating assembly may comprise multiple adjacent heat sources or lamps or lamps with multiple parallel filaments instead of the heat source(s) described.

Lastly, the heat sources 30 may not be identical to each other and either or both of the said heat sources may not be rectilinear, but for example annular, and in general with at least one portion that is curved or has another shape.

Still, one of the carriages may not carry the respective heat source 30, and in this case the heating of the intermediate portion is carried out by a single lamp. Furthermore, the mechanical breaking device could be replaced by a breaking device of the thermal type. Conveniently, the thermal breaking device comprises the heat source(s) described above.

## Claims

1. A machine (1) for cutting a laminated glass sheet comprising two lateral glass sheets (3)(4) and an intermediate sheet (5) made of thermoplastic material; the machine (1) comprising a supporting surface (6), a scoring device (14) comprising a scoring member for obtaining a respective scoring lines (16) on the glass sheets (3)(4), breaking means (18) for breaking said lateral glass sheets (3)(4) along a predefined cutting line (15) and splitting the laminated glass sheet (3)(4) into two parts joined together by an intermediate elongated portion (21) of said sheet (5) of thermoplastic material, and a heating assembly (26) for heating said intermediate elongated portion (21); the heating assembly (26) comprising at least one filament heat source (30) adapted to emit a continuous thermal beam for heating said intermediate elongated portion (21); said scoring device (14) comprising, for each glass sheet (3)(4), a corresponding motorized carriage (10) movable in a fixed rectilinear direction (11) between two terminal end-of-stroke positions, and a command and control unit (13) for controlling the movement of said carriages (10) in said rectilinear direction (11), **characterized in that** said filament heat source (30) and said scoring member are coupled with one of said carriages (10) to move together with the respective carriage (10) in said rectilinear direction (11).

2. The machine according to claim 1, **characterized in that** said heat source (30) has a dimension measured in a direction parallel to said rectilinear direction (11) smaller than, or equal to, a quarter of the maximum dimension of said supporting surface (6) measured in the same direction.

3. The machine according to claim 1 or 2, **characterized in that** said heat source (30) projects overhangingly from at least one side of said corresponding carriage (10).

4. The machine according to claim 1, **characterized in that** said heat source (30) is rectilinear or comprises at least one curved section.

5. The machine according to claim 1, **characterized by** comprising hinge means (40) having a hinge axis (41) orthogonal to said supporting surface (6) and interposed between said heat source (30) and said corresponding carriage (10); actuator means and control means (13) for controlling said actuator means being provided to rotate said heat source (30) about said hinge axis (41).

6. The machine according to any one of the preceding claims, **characterized in that** said heat source (30) is intersected by a plane which is orthogonal to said supporting surface (6) and is parallel to said fixed rectilinear direction (11), and on which said cutting line (15) lies.

7. The machine according to any one of the preceding claims, **characterized in that** said carriage (10) carries at least one further respective operating member (25) and/or a respective moving member (22) for moving the sheet (2) on said supporting surface (6); said heat source (30) being aligned with said members (22)(25) in a direction parallel to said fixed rectilinear direction (11).

8. The machine according to any one of the preceding claims, **characterized in that** said heating assembly (26) comprises at least one heat source (30) for each of said carriages.

9. The method for cutting a laminated glass sheet (2) comprising two lateral glass sheets (3)(4) and an intermediate sheet (5) made of thermoplastic material; the method being implemented by using a cutting machine (1) as claimed in claim 1 and comprising a breaking step for breaking the glass sheets (3)(4) along a cutting line (15) and a heating step for heating an intermediate elongated portion (21) of said sheet of thermoplastic material straddling said cutting line (15) by means of at least one filament heat source (30) adapted to emit a continuous thermal beam; the method being **characterized by** detecting a maximum dimension of said cutting line (15) in a transverse direction parallel to said fixed rectilinear direction (11), arranging and maintaining said heat source (30) in a fixed position below or above said sheet when the dimension of said heat source (30) is greater than said maximum dimension or moving said heat source (30) by means of said carriage (10) along said cutting line when said transverse dimension of the cutting line (15) is greater than the dimension of the heat source (30).

10. The method according to claim 9, **characterized in that** said heat source (30) is moved along said cutting lines (15) with an alternating cyclic movement.

11. The method according to claim 9, **characterized by** determining the dimension of said cutting line (15) in a direction transverse to said rectilinear direction (11) and rotating said heat source (30) with respect to said carriage (10) about a hinge axis (41) orthogonal to said supporting surface (6)

12. The method according to claim 9, **characterized in that** the heating steep is made after the breaking steep.

## Patentansprüche

1. Eine Maschine (1) zum Schneiden einer Verbundglasscheibe umfassend zwei seitliche Glasscheiben (3) (4) und eine Zwischenscheibe (5) aus thermoplastischem Material, wobei die Maschine (1) umfasst eine Stützfläche (6), eine Ritzvorrichtung (14) umfassend ein Ritzelement zum Erhalten einer entsprechenden Ritzlinie (16) auf den Glasscheiben (3) (4), Brechmittel (18) zum Brechen der seitlichen Glasscheiben (3) (4) entlang einer vordefinierten Schnittlinie (15) und zum Aufteilen der Verbundglasscheibe (3) (4) in zwei Teile, die durch einen dazwischenliegenden länglichen Abschnitt (21) der Scheibe (5) aus thermoplastischem Material miteinander verbunden sind, und eine Heizanordnung (26) zum Erwärmen des dazwischenliegenden länglichen Abschnitts (21), wobei die Heizanordnung (26) umfasst mindestens eine Filamentwärmequelle (30), die geeignet ist, einen kontinuierlichen Wärmestrahl zum Erwärmen des dazwischenliegenden länglichen Abschnitts (21) zu emittieren, wobei die Ritzvorrichtung (14) umfasst, für jede Glasscheibe (3) (4), einen entsprechenden motorisierten Schlitten (10), der in einer festen geradlinigen Richtung (11) zwischen zwei Hubendpositionen bewegbar ist, und eine Befehls- und Steuereinheit (13) zum Steuern der Bewegung der Schlitten (10) in der geradlinigen Richtung (11), **dadurch gekennzeichnet, dass** die Filamentwärmequelle (30) und das Ritzelement mit einem der Schlitten (10) gekoppelt sind, um sich gemeinsam mit dem jeweiligen Schlitten (10) in der geradlinigen Richtung (11) zu bewegen.

2. Die Maschine nach Anspruch 1, **dadurch gekennzeichnet, dass** die Wärmequelle (30) eine Abmessung hat, die in einer Richtung parallel zur geradlinigen Richtung (11) gemessen wird, die kleiner oder gleich einem Viertel der maximalen Abmessung der Stützfläche (6) ist, die in der gleichen Richtung gemessen wird.

3. Die Maschine nach Anspruch 1 oder 2, **dadurch gekennzeichnet, dass** die Wärmequelle (30) überhängend von mindestens einer Seite des entsprechenden Schlittens hervorsteht.

4. Die Maschine nach Anspruch 1, **dadurch gekennzeichnet, dass** die Wärmequelle (30) geradlinig ist oder mindestens einen gekrümmten Abschnitt umfasst.

5. Die Maschine nach Anspruch 1, **gekennzeichnet durch** Scharniermittel (40) mit einer Scharnierachse (41) orthogonal zur Stützfläche (6), die zwischen der Wärmequelle (30) und dem entsprechenden Schlitten (10) angeordnet ist, Aktorvorrichtung und Steuervorrichtung (13) zum Steuern der Aktorvorrichtung, die die bereitgestellt ist, um die Wärmequelle (30) um die Scharnierachse (41) zu drehen.

6. Die Maschine nach einem der vorhergehenden Ansprüche, **dadurch gekennzeichnet, dass** die Wärmequelle (30) von einer Ebene durchschnitten wird, die orthogonal zur Stützfläche (6) und parallel zur festen geradlinigen Richtung (11) ist, und auf der die Schnittlinie (15) liegt.

7. Die Maschine nach einem der vorhergehenden Ansprüche, **dadurch gekennzeichnet, dass** der Schlitten (10) mindestens ein weiteres entsprechendes Betriebselement (25) und/oder ein entsprechendes Bewegungselement (22) zum Bewegen des Scheibe (2) auf der Stützfläche (6) trägt, wobei die Wärmequelle (30) mit den Elementen (22) (25) in einer Richtung parallel zur festen geradlinigen Richtung (11) ausgerichtet ist.

8. Die Maschine nach einem der vorhergehenden Ansprüche, **dadurch gekennzeichnet, dass** die Heizanordnung (26) mindestens eine Wärmequelle (30) für jeden der Schlitten (10) umfasst.

9. Das Verfahren zum Schneiden einer Verbundglasscheibe (2) umfassend zwei seitliche Glasscheiben (3) (4) und eine Zwischenscheibe (5) aus thermoplastischem Material, wobei das Verfahren unter Verwendung einer Schneidemaschine (1) nach Anspruch 1 durchgeführt wird, und umfasst einen Brechschritt zum Brechen der Glasscheiben (3) (4) entlang einer Schnittlinie (15) und einen Erwärmungsschritt zum Erwärmen eines zwischenliegenden länglichen Abschnitts (21) der Scheibe aus thermoplastischem Material, der die Schnittlinie (15) überspannt, mittels mindestens einer Filamentwärmequelle (30), die geeignet ist, einen kontinuierlichen Wärmestrahl zu emittieren, wobei das Verfahren **gekennzeichnet ist durch** das Erfassen einer maximalen Abmessung der Schnittlinie (15) in einer Querrichtung parallel zur festen geradlinigen Richtung (11), das Anordnen und Halten der Wärmequelle (30) in einer festen Position unterhalb oder oberhalb der Scheibe, wenn die Abmessung der Wärmequelle (30) größer als die maximale Abmessung ist, oder das Bewegen der Wärmequelle mittels des Schlittens (10) entlang der Schnittlinie (15), wenn die Querabmessung der Schnittlinie größer als die Abmessung der Wärmequelle (30) ist.

10. Das Verfahren nach Anspruch 9, **dadurch gekennzeichnet, dass** die Wärmequelle (30) entlang der Schnittlinien (15) mit einer abwechselnd zyklischen Bewegung bewegt wird.

11. Das Verfahren nach Anspruch 9, **gekennzeichnet durch** das Bestimmen der Abmessung der Schnittlinie (15) in einer Richtung quer zur geradlinigen Richtung (11) und das Drehen der Wärmequelle (30) in Bezug auf den Schlitten (10) um eine Scharnierachse (41) orthogonal zur Stützfläche (6).

12. Das Verfahren nach Anspruch 9, **dadurch gekennzeichnet, dass** der Erwärmungsschritt nach dem Brechschritt durchgeführt wird.

## Revendications

1. Appareil (1) pour couper une feuille de verre laminée comprenant deux feuilles de verre latérales (3) (4) et une feuille intermédiaire (5) en matière thermoplastique ; l'appareil (1) comprenant une surface de support (6), un dispositif de marquage (14) comprenant un élément de marquage pour obtenir des lignes de marquage respectives (16) sur les feuilles de verre (3) (4), des moyens de rupture (18) pour rompre lesdites feuilles de verre latérales (3) (4) le long d'une ligne de coupe prédéfinie (15) et diviser la feuille de verre laminée (3) (4) en deux parties réunies par une partie allongée intermédiaire (21) de ladite feuille (5) en matière thermoplastique, et un ensemble chauffant (26) pour chauffer ladite partie allongée intermédiaire (21) ; l'ensemble chauffant (26) comprenant au moins une source de chaleur à filament (30) adaptée pour émettre un faisceau thermique continu pour chauffer ladite partie allongée intermédiaire (21) ; ledit dispositif de marquage (14) comprenant, pour chaque feuille de verre (3) (4), un chariot motorisé correspondant (10) mobile dans une direction rectiligne fixe (11) entre deux positions de fin de course, et une unité de commande et de contrôle (13) pour contrôler le mouvement desdits chariots (10) dans ladite direction rectiligne (11), **caractérisé en ce que** ladite source de chaleur à filament (30) et ledit élément de marquage sont couplés à l'un desdits chariots (10) pour se déplacer ensemble avec le chariot respectif (10) dans ladite direction rectiligne (11).

2. Appareil selon la revendication 1, **caractérisé en ce que** ladite source de chaleur (30) a une dimension mesurée dans une direction parallèle à ladite direction rectiligne (11) inférieure à, ou égale à, un quart de la dimension maximale de ladite surface de support (6) mesurée dans la même direction.

3. Appareil selon la revendication 1 ou 2, **caractérisé en ce que** ladite source de chaleur (30) dépasse en saillie d'au moins un côté dudit chariot correspondant (10).

4. Appareil selon la revendication 1, **caractérisé en ce que** ladite source de chaleur (30) est rectiligne ou comprend au moins une section incurvée.

5. Appareil selon la revendication 1, **caractérisé en ce qu'**il comprend un ensemble d'articulation (40) ayant un axe d'articulation (41) orthogonal à ladite surface de support (6) et interposé entre ladite source de chaleur (30) et ledit chariot correspondant (10) ; des moyens d'actionnement et des moyens de commande (13) pour commander lesdits moyens d'actionnement prévus pour faire tourner ladite source de chaleur (30) autour dudit axe d'articulation (41).

6. Appareil selon l'une quelconque des revendications précédentes, **caractérisé en ce que** ladite source de chaleur (30) est entrecoupée par un plan qui est orthogonal à ladite surface de support (6) et est parallèle à ladite direction rectiligne fixe (11), et sur lequel se trouve ladite ligne de coupe (15).

7. Appareil selon l'une quelconque des revendications précédentes, **caractérisé en ce que** ledit charriot (10) porte au moins un autre élément d'actionnement respectif (25) et/ou un élément mobile respectif (22) pour déplacer la feuille (2) sur ladite surface de support (6) ; ladite source de chaleur (30) étant alignée avec lesdits éléments (22) (25) dans une direction parallèle à ladite direction rectiligne fixe (11).

8. Appareil selon l'une quelconque des revendications précédentes, **caractérisé en ce que** ledit ensemble chauffant (26) comprend au moins une source de chaleur (30) pour chacun desdits chariots.

9. Procédé pour couper une feuille de verre laminée (2) comprenant deux feuilles de verre latérales (3) (4) et une feuille intermédiaire (5) en matière thermoplastique ; le procédé étant mis en oeuvre en utilisant un appareil à couper (1) selon la revendication 1 et comprenant une étape de rupture pour rompre les feuilles de verre (3) (4) le long d'une ligne de coupe (15) et une étape de chauffage pour chauffer une partie allongée intermédiaire (21) de ladite feuille en matière thermoplastique chevauchant ladite ligne de coupe (15) au moyen d'au moins une source de chaleur à filament (30) adaptée pour émettre un faisceau thermique continu ; le procédé étant **caractérisé par** la détection d'une dimension maximale de ladite ligne de coupe (15) dans une direction transversale parallèle à ladite direction rectiligne fixe (11), l'agencement et le maintien de ladite source de chaleur (30) dans une position fixe en-dessous ou au-dessus de ladite feuille lorsque la dimension de ladite source de chaleur (30) est supérieure à ladite dimension maximale ou le déplacement de ladite source de chaleur (30) au moyen dudit chariot (10) le long de ladite ligne de coupe lorsque ladite dimension transversale de la ligne de coupe (15) est supérieure à la dimension de la source de chaleur (30).

10. Procédé selon la revendication 9, **caractérisé en ce que** ladite source de chaleur (30) est déplacée le long desdites lignes de coupe (15) avec un mouvement cyclique alternatif.

11. Procédé selon la revendication 9, **caractérisé par** la détermination de la dimension de ladite ligne de coupe (15) dans une direction transversale à ladite direction rectiligne (11) et la rotation de ladite source de chaleur (30) par rapport audit chariot (10) autour d'un axe d'articulation (41) orthogonal à ladite surface de support (6).

12. Procédé selon la revendication 9, **caractérisé en ce que** l'étape de chauffage est faite après l'étape de rupture.
